**Europäisches Patentamt**

**European Patent Office**

**Office européen des brevets**

(11) Veröffentlichungsnummer: **0 001 152**
**B1**

# EUROPÄISCHE PATENTSCHRIFT

(21) Anmeldenummer: **78200181.2**

(22) Anmeldetag: **11.09.78**

(51) Int. Cl³: **B 23 Q 7/14**

(54) Palettenförderer

(30) Priorität: **14.09.77 CH 11212/77**

(43) Veröffentlichungstag der Anmeldung:
**21.03.79 Patentblatt 79/06**

(45) Bekanntmachung des Hinweises auf die Patenterteilung:
**23.07.80 Patentblatt 80/15**

(84) Benannte Vertragsstaaten:
**DE FR GB SE**

(56) Entgegenhaltungen:
**Machines Production, 25 Juni 1975 Sofetec,**
**Boulogne, Seite 31**
**Werkstattstechnik, Band 62, Juli 1972, Springer-**
**Verlag, Berlin, Seite 394 und 395**

(73) Patentinhaber: **Werkzeugmaschinenfabrik**
**Oerlikon-Bührle AG**
**Birchstrasse 155**
**CH - 8050 Zürich (CH)**

(72) Erfinder: **Ewertowski, Norbert, Ing. Grad.**
**Römerstrasse 39**
**D - 6057 Dietzenbach-Steinberg (DE)**
**Janser, Herbert, Ing. ETH**
**Campanellaweg 19**
**CH - 8048 Zurich (CH)**

Courier Press, Leamington Spa, England.

Palettenförderer

Die Erfindung betrifft einen Palettenförderer mit kreisförmiger Förderbahn für Paletten, dessen von einer Drehbühne getragene Palettenaufnahmen in mehrere Uebergabepositionen drehbar sind und rechtwinklig zur kreisförmigen Förderbahn angeordnete Palettenführungen aufweisen, und auf dem die Paletten in Richtung der Palettenführungen radial verschiebbar sind.

Derartige Palettenförderer mit einer um 180° in zwei Winkelstellungen drehbaren Drehbühne, die nur zwei Palettenaufnahmen trägt, sind auch als Palettenwechsler bekannt. Jeder Palettenaufnahme ist ein Palettenschubantrieb zugeordnet, und die Paletten werden von jedem Palettenschubantrieb wechselweise auf die Arbeitsmaschine und zurück bewegt. Beide identischen Palettenschubantriebe weisen gleiche Schubwege mit zwei Haltestellungen auf, die den Schubweg begrenzen. In Fertigungssystemen mit Förderstrecken von unterschiedlicher Bauart und Konfiguration ist jeder Arbeitsmaschine ein Palettenwechsler als Verbindungseinheit zur Förderstrecke zugeordnet.

Es ist bekannt, den Palettenförderer als Kreisförderer mit vier Palettenaufnahmen ohne Palettenschubantriebe auszubilden, wie in "Werkstatt und Betrieb" 106 (1973) S. 689/90 und "Werkstattstechnik WT" 4 (1973) S. 202/3, bei dem Fertigungssystem Prisma M 250/02 CNC mit zehn Palettenplätzen und zwei Arbeitsmaschinen dargestellt. Auch hier ist jeder Arbeitsmaschine ein Palettenwechsler zur Maschinenbeschickung zugeordnet und ein dritter Palettenwechsler dient zum Beschicken des Kreisförderers von der Spannstation.

Es wurden auch Palettenwechsler vorgeschlagen, deren Drehbühne ebenfalls vier Palettenaufnahmen trägt und in vier 90°-Stellungen drehbar ist. Um in jeder Stellung eine Palettenübergabe ohne Palettenwechsler zu ermöglichen, ist jeder Palettenaufnahme ein Palettenschubantrieb zugeordnet. Diese Palettenschubantriebe sind identisch und weisen gleiche Schubwege mit zwei Haltestellungen auf, die den Schubweg begrenzen.

Aufgabe der Erfindung ist die Schaffung eines Palettenförderers mit kreisförmiger Förderbahn, der in einer Baueinheit mit einem Palettenschubantrieb zusammengefasst ist und einen anpassungsfähigen Einsatz in Fertigungssystemen gewährleistet.

Diese Aufgabe wird mit einem Palettenförderer der eingangs genannten Art gelöst, der erfindungsgemäss die kennzeichnenden Merkmale des Patentanspruches 1 aufweist. Weiterbildungen sind in den Unteransprüchen angegeben.

Der Palettenförderer gemäss der Erfindung vereinigt in sich folgende Vorteile.

1. Reduzierter Bauaufwand, weil die Funktionen Palettenfördern und Palettenwechseln auf bei einer grösseren. Anzahl von Palettenaufnahmen in einer Einheit mit nur einem Palettenschubantrieb zusammengefasst sind. Hierdurch erübrigen sich zusätzliche separate Palettenwechsler mit einer Mehrzahl von Palettenschubantrieben, Drehantrieben und Steueraggregaten.

2. Anpassungsfähiger und einfacher Aufbau, weil der Palettenschubantrieb in beliebige Schubrichtungen und in jeder Schubrichtung für mehrere Schublängen wirksam werden kann. Hierdurch lassen sich kostengünstige Fertigungssysteme erstellen, die sowohl mit unabhängiger, manuell gesteuerter Maschinenbeschickung und erforderlicher guter Zugängigkeit zum Maschinentisch sowie auch mit zentral gesteuerter abhängiger Beschickung für automatischen ein- und mehrstufigen Betrieb geeignet sind.

3. Raumsparende Bauweise für ausschliesslich zentral gesteuerte Fertigungssysteme, die ohne manuelle Eingriffe an den auf den Maschinen palettierten Werkstücken arbeiten.

4. Für grössere Fertigungssysteme mit Palettenwagen können mehrere erfindungsgemässe Palettenförderer ohne zusätzliche Palettenschubeinrichtungen mit auf die Arbeitsmaschinen abgestimmtem Abstand verkettet werden, wobei sie als Puffer mit hoher Kapazität wirken. Die Arbeitsmaschinen werden direkt von den Palettenförderern beschickt, und zwischen ihnen erfolgt bei mehrstufigem Betrieb ein direkter Palettenfluss, der den Palettenwagen entlastet. Maschinenstillstandszeiten werden infolgedessen auch in kritischen Phasen eines 3/1-Schichtbetriebes und bei flexiblen Arbeitsabläufen mit einter Mehrzahl von Werkstückarten von unterschiedlicher Priorität vermieden.

5. Insbesondere bei mehrstufiger Arbeitsweise und spanintensiven Arbeiten ist eine Zwischenreinigung vor der Weiterbearbeitung auf der nächsten Arbeitsmaschine oft wünschenswert. Der erfindungsgemässe Palettenförderer gestattet die Verwirklichung dieser Forderung ohne besondere Transportmittel bei kleinem Aufwand und Raumbedarf.

Die Erfindung wird anhand der Zeichnung in Einzelheiten, Anwendungen und Alternativausführungen im folgenden beschrieben. Es zeigt:

Fig. 1 einen senkrechten Gesamtschnitt durch einen Palettenförderer mit acht Palettenaufnahmen und Kettenschubgetriebe nach Linie I/I in Fig. 2,

Fig. 2 eine Ansicht von oben des Palettenförderers gemäss Fig. 1,

Fig. 3 einen vergrösserten senkrechten Teilschnitt von Fig. 1,

Fig. 4 ein Steuerschema des Kettenschubgetriebes gemäss Fig. 1,

Fig. 5 einen vergrösserten senkrechten Teilschnitt mit eingekuppelter Palettenklinke,

Fig. 6 einen Teilschnitt wie Fig. 5, jedoch mit der Palettenklinke in Freistellung,

Fig. 7 einen senkrechten Gesamtschnitt wie Fig. 1, jedoch mit einem Arbeitszylinder als Palettenschubantrieb,

Fig. 8 einen senkrechten Gesamtschnitt durch einen Palettenförderer mit zwei Palettenaufnahmen und in zwei Schubrichtungen' wirkender Palettenschubeinrichtung.

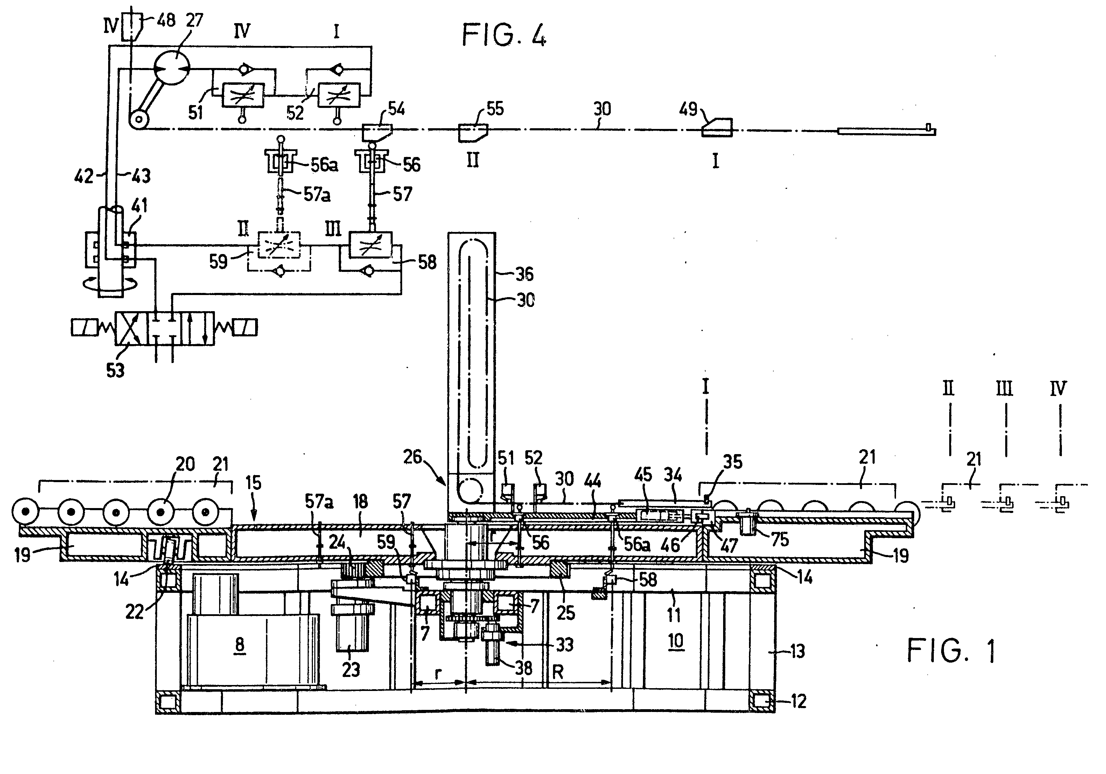

Der in den Figuren 1, 2, 3 dargestellte Palettenförderer weist den Sockel 10 auf, der im wesentlichen aus zwei durch senkrechte Stützen 13 verbundene vieleckige Ringe 11, 12 besteht. An der Unterseite des oberen Ringes 11 sind zwei Querträger 7 angeschraubt, zwischen denen die Sockelnabe 9 eingeschweisst ist. Die Oberseite des oberen Ringes 11 ist als ringförmige Tragbahn mit gehärteten Platten 14 ausgebildet, auf die eine Drehbühne 15 lagert, die mittels eines an der Sockelnabe 9 senkrecht angeflanschten Lagerzapfens 16 und dem Wälzlager 17 zentriert wird. Innerhalb des Sockels 10 ist ein Hydraulik-Steueraggregat 8 angeordnet.

Die Drehbühne 15 besteht aus dem achteckigen Mittelteil 18, an dessen acht senkrechten Aussenwänden acht Palettenaufnahmen 19 angeschraubt sind. Jede Palettanhaufnahme besitzt an ihrer Oberseite eine durch Rollen 20 gebildete Palettenführung, auf der die in Fig. 1 strichpunktiert gezeichneten Paletten 21 radial verschiebbar sind. An der Unterseite jeder Palettenaufnahme 19 sind zwei Aussparungen vorgesehen, in denen insgesamt sechzehn kegelförmige Tragrollen 22 lagern, die auf den Platten 14 abrollen und die Drehbühne 15 tragen. Zum Antrieb der Drehbühne 15 in 45°-Winkelpositionen dient ein im Sockel 10 angeordneter Hydromotor 23, dessen Ritzel 24 mit einem am Mittelteil 18 angeschraubten Zahnkranz 25 in Eingriff steht.

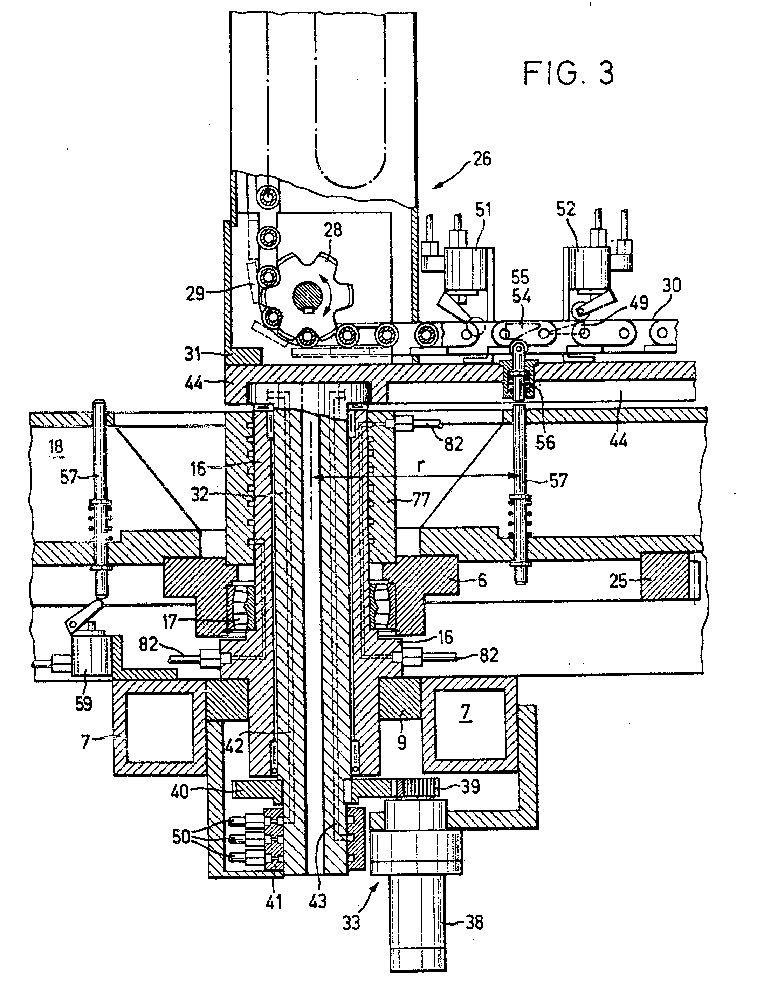

Zur radialen Verschiebung der Paletten 21 ist im Zentrum des Palettenförderers ein Palettenschubantrieb 26 mit einer endlichen Kette 30 als Schubelement angeordnet, deren Kettenglieder in bekannter Weise gemäss Fig. 3 an ihrer unteren bzw. linken Seite je eine Anschlagplatte 29 aufweisen, um ein aufwärts gerichtetes Einknicken unter Last zu verhindern und auch ein freitragendes Ausschieben zu ermöglichen. Die Kette 30 wird von einem Hydromotor 27 mittels des Treibrades 28 in beide Richungen bewegt, und an ihrem äusseren Ende ist ein Kuppelstück 34 befestigt, das mit den Palettenklinken 35 zusammenarbeitet. Das innere Ende der Kette 30 wickelt sich während der Kettenbewegung in einem Führungsrahmen 36 auf und ab, der sich auf dem Lagergehäuse 31 für den Hydromotor 27 und das Treibrad 28 befindet. Das Lagergehäuse 31 ist koaxial zum Lagerzapfen 16 auf der Oberseite eines Armes 44 angeschraubt, der seinerseits auf der oberen Stirnseite einer in der Bohrung des Lagerzapfens 16 drehbar gelagerten Stellhülse 32 angeflanscht ist. Mittels einer Winkelorientierung 33 kann die Stellhülse 32 mit dem Arm 44 und dem Lagergehäuse 31 unabhängig von der Drehbühne 15 gedreht werden.

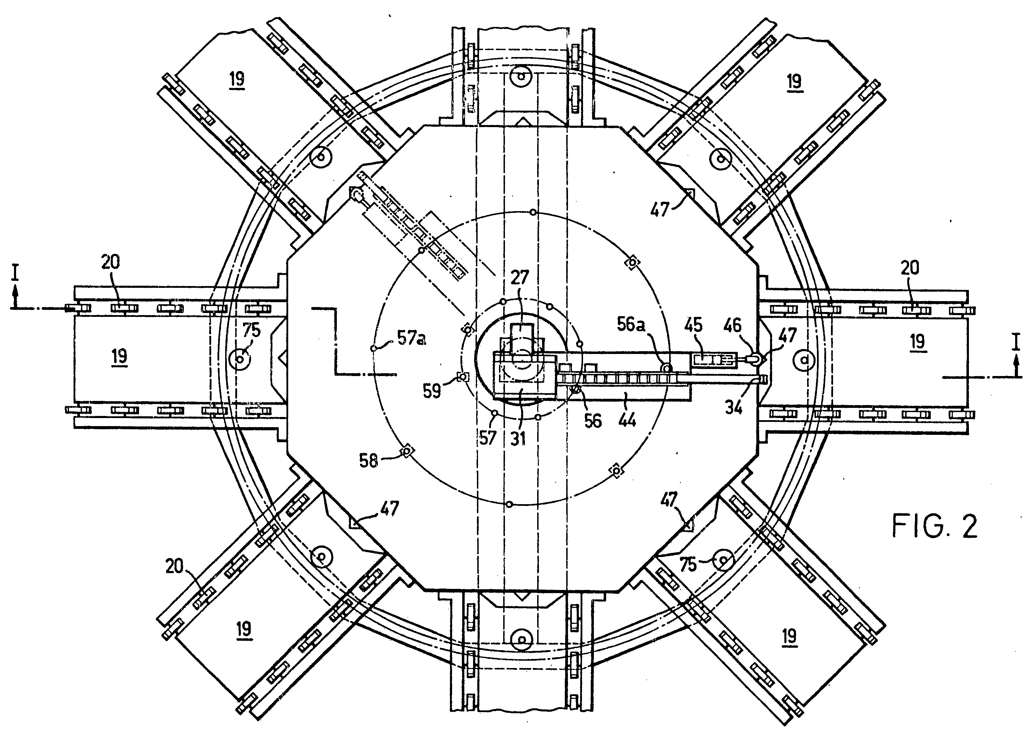

Die Winkelorientierung 33 besteht aus einem an der Querstrebe 7 befestigten Schrittmotor 38 mit Untersetzungstrieb 43, dessen Ritzel 39 mit einem Stirnrad 40 zusammenarbeitet, das unterhalb des Lagerzapfens 16 auf dem auskragenden Teil der Stellhülse 32 aufgekeilt ist. Der Schrittmotor 38 ist derart ansteuerbar, dass die Stellhülse 32, der Arm 44, das Lagergehäuse 31 und damit die Schubrichtung der Kette 30 in jede erforderliche 45°-Winkelstellung orientiert werden kann. In Figur 2 ist strichpunktiert eine nicht in der Zeichenebene von Fig. 1 und Fig. 3 liegende Schubrichtung angedeutet. Zur präzisen Fixierung jeder Schubrichtung dient der Arm 44 mit dem Index-Kolbentrieb 45, dessen am Kolbenstangenende gelagerte Indexrolle 46 mit dem an jeder Palettenaufnahme 19 befindlichen Indexprisma 47 zusammenarbeitet.

Wie aus Fig. 1, 2, 3, 4 ersichtlich, erfolgt die Beaufschlagung des Hydromotors 27 zur Palettenverschiebung durch die am unteren Ende der Stellhülse 32 lagernde Zuführbuchse 41, wozu zwei von ihren drei Anschlüssen 50 und die in der Stellhülse befindlichen Oelbohrungen 42, 43 dienen. Der dritte Anschluss und eine dritte nicht gezeichnete Oelbohrung dienen zur einseitigen Beaufschlagung des Index-Kolbentriebes 45, dessen Rückstellung mittels einer der besseren Uebersicht wegen nicht gezeichneten Feder erfolgt.

Bei diesem vielseitig anwendbaren Ausführungsbeispiel des Palettenförderers kann das Kupplestück 34 mit bzw. ohne Palette 21 in eine innere Schubstellung I und drei äussere Schubstellungen II, III, IV eingefahren werden. Die innere Schubstellung I ist in jeder Winkelstellung des Palettenschubantriebes 26 einfahrbar, wären die äusseren Schubstellungen II, III, IV nur alternativ eingefahren werden müssen, wie es später aus der Beschreibung der Fertigungssysteme ersichtlich wird. Zur Ansteuerung der Schubstellungen I und IV sind an einer Seite der Kette 30 zwei aufwärts wirkende Schaltstücke 48, 49 in einer Schaltspur angeordnet. Sie können zwei auf dem Arm 44 befindliche und in Reihe geschaltete Stromregelventile, 51, 52 betätigen die ihrerseits im Zusammenhang mit der besseren Uebersicht wegen nicht gezeichneten Signalgebern und mit dem im Hydraulik-Steueraggregat 8 angeordneten E1-Magnetventil 53 das Einfahren in die Schubstellungen bewirken. Durch Versetzen des Schaltstückes 48 an der Kette 30 kann der maximale Schubweg bei unverändertem Palettenförderer an die Erfordernisse des jeweiligen Fertigungssystem angepasst werden. In der inneren unveränderlichen Schaltstellung I werden die Paletten 21 mittels des Arretierzylinders 75 auf den Palettenaufnahmen 19 arretiert und gleichzeitig die Palettenklinken 35 in Freistellung angehoben, wie es später erläutert wird. In dieser Freistellung der Palettenklinken 35 kann die Winkelorientierung 33 den Palettenschubantrieb 26 in die für die nächste Palettenübergabe erforderliche Winkelstellung drehen.

Das Einfahren des Kuppelstückes 34 aus der Schubstellung 1 in die Schubstellungen II oder III wird durch in Reihe geschaltete Stromregelventile 58, 59, angesteuert, die in einem Abstand "r" bzw. "R", bezogen auf die Drehachse der Drehbühne 15, im Sockel 10 in einer Anzahl und Winkellage angeordnet sind, wie es die Uebergabepositionen des jeweiligen Fertigungssystems erfordern. Ihre Betätigung erfolgt mittels der an beiden Kettenseiten angeordneten und in zwei weiteren Schaltspuren abwärts gerichtet wirkenden Schaltstücke 54, 55, über Stössel 56, 56a und Stösselstangen 57, 57a. Das Schaltstück 54 kann in der einen Schaltspur gegen Federdruck auf den im Arm 44 mit Abstand "r" senkrecht geführten Stössel 56 einwirken, und das Schaltstück 55 kann in der anderen Schaltspur gegen Federdruck auf den im Arm 44 mit Abstand "R" senkrecht geführten Stössel 56a einwirken. Zur Uebertragung des Schalthubes der Stössel 56 and 56a sind im Mittelteil 18 der Drehbühne 15 jeder Palettenaufnahme je eine senkrecht geführte Stösselstange 57 auf einem kleineren Teilkreisdurchmesser von 2 × "r" und je eine senkrecht geführte Stösselstange 57a auf einem grösseren Teilkreisdurchmesser 2 × "R" zugeordnet. Die Stösselstangen werden durch aufwärts wirkende Federkräfte und Anschlagringe in nicht beaufschlagtem Zustand der Schaltung mit einem kleinen Abstand zu den unteren Enden der Stössel 56, 56a gehalten, so dass sich die Drehbühne 15 und der Palettenschubantrieb 26 mit dem Arm 44 unabhängig voneinander berührungslos drehen können.

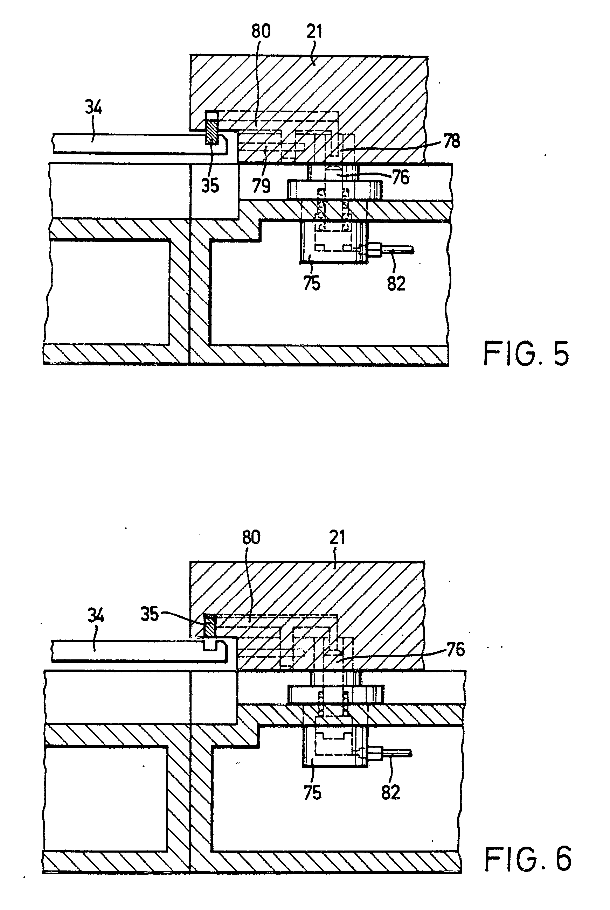

In jeder Palettenaufnahme 19 ist ein Arretierzylinder 75 eingebaut, dessen senkrechte Kolbenstange 76 während des Einfahrens der Paletten 21 bis in die innere Schubstellung I unter Federdruck abwärts gehalten wird (Fig. 5). Nach beendetem Einfahrvorgang wird der jeweilige Arretierzylinder 75 durch die auf dem Lagerzapfen 16 lagernde am Lagerflansch 6 der Drehbühne 15 feste Zuführbuchse 77 vom Hydraulik-Steueraggregat 8 über die Leitungen 82 beaufschalgt. Die Kolbenstange 76 dringt in die Palettenbohrung 78 ein und drückt den in der Palette 21 um den Bolzen 79 schwenkbaren Winkelhebel 80 mit der an ihm festen Palettenklinke 36 aufwärts in die Freistellung vom Kuppelstück 34 (Fig. 6).

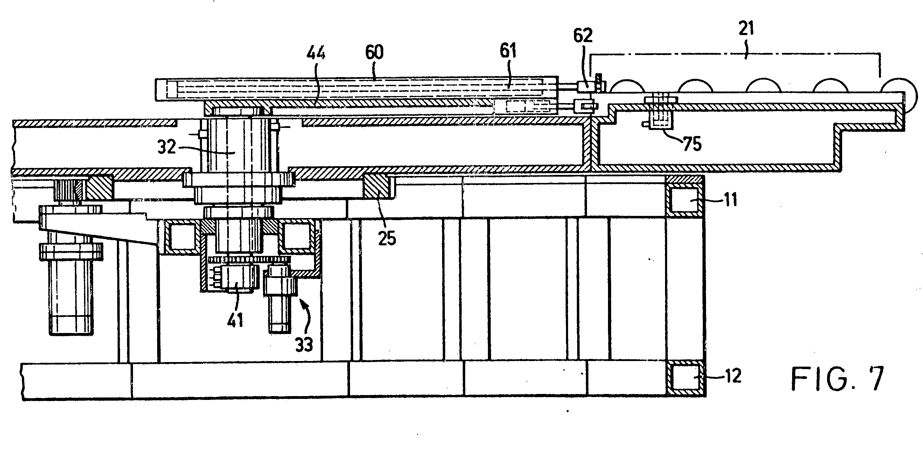

In Figur 7 ist die einfachste Ausführung eines erfindungsgemässen Palettenförderers für etwa acht Palettenaufnahmen dargestellt, der bei direkter Palettenübergabe zu den Arbeitsmaschinen mit kurzer Palettenverschiebung angewandt werden kann. In diesem Fall wird bei der Montage des Palettenförderers anstelle des Kettenschubgetriebes ein durch die Zuführbuchse 41 direkt beaufschlagbarer Arbeitszylinder 60 auf dem Tragarm 44 angeschraubt. Seine Kolbenstange 61 ist mit dem an ihrem äusseren Ende befindlichen Kuppelstück 62 in zwei Anschlagstellungen verschiebbar.

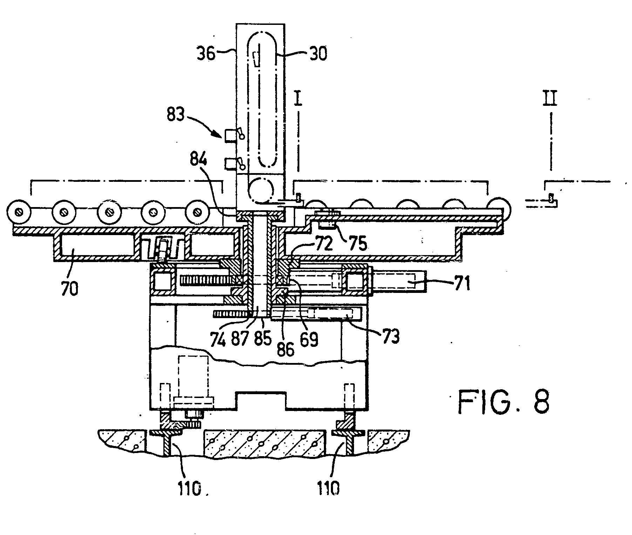

Die Figur 8 zeigt einen Palettenförderer mit einer einteiligen Drehbühne 70 und zwei Palettenaufnahmen. Der mit einer Kette arbeitende Palettenschubantrieb 83, der mittels einer Platte 84 auf der oberen Stirnseite der Stellhülse 85 zentriert und angeschraubt ist, ermöglicht einen zentrischen Kraftangriff bei der Palettenverschiebung, trotzdem die Palettenaufnahmen in raumsparender Weise dicht nebeneinander auf der Drehbühne 70 angeordnet sind. Dieser Aufbau wird insbesondere dadurch ermöglicht, dass sich die Kette 30 im koaxial zum Lagerzapfen 86 angeordneten Führungsrahmen 36 aufwickelt. (Die bekannten, ähnlich, raumgünstigen Palettenwechsler weisen an jeder Längsseite der Drehbühne je einen Arbeitszylinder zur Palettenverschiebung mit seitlichem Kraftangriff auf, der nachteilige Eckmomente verursacht und zusätzliche Führungselemente erfordert). Die 180°-Drehung der Drehbühne 70 erfolgt mittels des Zahnkolbentriebes 71, der mit einer Stirnverzahnung 69 der an der Drehbühne angeflanschten Lagernabe 72 zusammenarbeitet. Der Palettenschubantrieb 83 hat zwei Schubstellungen I und II, und zur Winkeleinstellung in seine zwei 180°-Stellungen dient ein kleiner Zahnkolbentrieb 73, der in eine am unteren Ende der Stellhülse 85 angearbeitete Stirnverzahnung 74 eingreift. Die Energiezuführung zu den Arretierzylindern 75 und zum Hydromotor des Palettenschubantriebes 83 erfolgt mit nicht gezeichneten flexiblen seitungen, die durch die grosse Bohrung 87 der Stellhüle 85 geführt werden.

**Patentansprüche**

1. Palettenförderer mit kreisförmiger Förderbahn für Paletten, dessen von einer Drehbühne (15) getragene Palettenaufnahmen (19) in mehrere Uebergabepositionen drehbar sind und rechtwinklig zur kreisförmigen Förderbahn angeordnete Palettenführungen (20) aufweisen, und auf dem die Paletten (21) in Richtung der Palettenführungen radial verschiebbar sind, dadurch gekennzeichnet, dass im Zentrum des Palettenförderers ein Palettenschubantrieb (26, 83) unabhängig von der kreisförmigen Palettenförderung um eine senkrechte Achse in mehrere Winkelstellungen drehbar angeordnet ist und seine Schubkraft in den Winkelstellungen in Richtung der jeweiligen Palettenführung (20) einer in Uebergabeposition befindlichen Palettenaufnahme (19) wirkt.

2. Palettenförderer nach Anspruch 1, dadurch gekennzeichnet, dass der Palettenschubantrieb (26, 83) an der oberen Stirnseite einer Stellhülse (32, 85) befestigt ist, die in einer Bohrung des Lagerzapfens (16, 86) der Drehbühne (15, 70) gelagert ist, und dass am unteren Ende der Stellhülse (32, 85) eine Stirnverzahnung (40, 74) angeordnet ist, die mit dem Ritzel (39) bzw. Zahnkolbentrieb (73) einer Winkelorientierung (33) zusammenarbeitet.

3. Palettenförderer nach Anspruch 1, dadurch gekennzeichnet, dass der Palettenschubantrieb (26) einen horizontalen, radial gerichteten Arm (44) aufweist, der an seinem äusseren Ende einen Index-Kolbentrieb (45) trägt, dessen Indexrolle (46) mit je einem an jeder Palettenaufnahme (19) festen Indexprisma (47) zusammenarbeitet.

4. Palettenförderer nach Anspruch 3, dadurch gekennzeichnet, dass das Kupplungsstück (34) des Palettenschubantriebes (26) im Zusammenwirken mit der Kette (30) auf dem Arm (44) sowie im Sockel (10) angeordneten Schalt- und Steuerelementen in mehrere Schubstellungen (I, II, III, IV) einfahrbar ist und zur Betätigung der im Sockel befindlichen Schalt- und Steuerelemente zwei im Arm (44) senkrecht geführte Stössel (56, 56a) dienen, die mit in der Drehbühne (15) senkrecht verschiebbaren Stösselstangen (57, 57a) zusammenarbeiten.

### Revendications

1. Transporteur de palettes avec une voie de transport circulaire pour les palettes, dont les récepteurs de palettes (19) portés par une plate-forme rotative (15) sont susceptibles de tourner dans plusieurs positions de transfert et comportent des guidages de palettes (20) disposés à angle droit par rapport à la voie de transport circulaire, transporteur sur lequel les palettes (21) sont susceptibles d'être déplacées radialement dans la direction des guidages de palettes, transporteur caractérisé en ce que au centre de ce transporteur est disposé un entraînement (26, 83) pour le déplacement des palettes, susceptible de tourner, indépendamment du transport circulaire des palettes autour d'un axe vertical dans plusieurs positions angulaires, et qui exerce son effort de déplacement dans ces positions angulaires en direction du guidage de palettes considéré (20) d'un récepteur de palettes (19) se trouvant en position de transfert.

2. Transporteur de palettes selon la revendication 1, caractérisé en ce que l'entraînement de déplacement des palettes (26, 83) est fixé sur la face frontale supérieure d'une douille de conditionnement (32, 85) montée dans un alésage du pivot de palier (16, 86) de la plate-forme rotative (15, 70), une denture frontale (40, 74) étant disposée à l'extrémité inférieure de la douille de positionnement (32, 85), denture qui coopère avec le pignon (39) ou bien la tige dentée du piston (73) d'un dispositif d'orientation angulaire (33).

3. Transporteur de palettes selon la revendication 1, caractérisé en ce que l'entraînement de déplacement des palettes (26) comporte un bras horizontal (44) orienté radialement portant à son extrémité extérieure une tige de piston d'indexation (45) dont le galet d'indexation (46) coopère avec un prisme d'indexation (47) fixe sur chacun des récepteurs de palettes (19).

4. Transporteur de palettes selon la revendication 3, caractérisé en ce que la pièce d'accouplement (34) de l'entraînement de déplacement des palettes (26) est susceptible d'être ramenée, en coopération avec la chaîne (30) sur le bras (44) ainsi qu'avec des éléments de commutation et de commande disposés dans le socle (10), dans plusieurs positions de déplacement (I, II, III, IV), tandis que deux poussoirs (56, 56a) guidés verticalement dans le bras (44) servent à actionner les éléments de commutation et de commande se trouvant dans le socle, ces poussoirs coopérant avec des tiges de poussoirs (57, 57a) susceptibles de coulisser verticalement dans la plate-forme rotative (15).

### Claims

1. A pallet feeder with a circular-shaped path of travel for the pallets, the pallets receivers (19) of said pallet feeder are supported by a rotatable platform (15) for moving them into a number of transfer positions, this pallets receivers (19) having pallets guide means (20) arranged essentially perpendicular to the circular-shaped path of travel and onto which pallets receivers there can be automatically shifted the pallets (20) in the direction of the pallet guide means (20): characterised in that a pallet thrust drive (26, 83) is arranged substantially at the center of the pallet feeder; which is rotatably mounted for movement into a number of angular positions about an essentially vertical axis and independent of the circular-shaped pallet feed movement; and said pallet thrust drive (26, 83) being effective in the angular positions in the directions of the related pallets guide means (20) of a pallet receiver (19) located in a transfer position.

2. The pallet feeder as defined in claim 1 characterised in that the pallet thrust drive (26, 83) is arranged at the upper front face of an adjustment sleeve (32, 85), said adjustment sleeve (32, 85) being mounted in a bore of a bearing journal (16, 86) of said rotatable platform (15, 70) and at the lower end of said adjustment sleeve (32, 85) is arranged a spur gear (40, 74) coacting with a tooth piston drive (73) or a pinion (39) of an angle orientation device (33).

3. The pallet feeder as defined in claim 1 characterised in that the pallet thrust drive (26) comprises a substantially horizontal, radially directed arm (44), supporting at his outer end an index-piston drive (45) means including an index roll (46) coacting with a respective fixed index member (47) at each pallet receiver (19).

4. The pallet feeder as defined in claim 3 characterised in that a coupling element (34) of the pallet thrust drive (26) coating with a drive chain (30) on said arm (44) and with switching and control elements arranged in a base member (10) is movable into a number of thrust positions (I, II, III, IV) and two plungers are essentially vertically guided at the arm (44) for actuating the switching and control elements; these two plungers (56, 56a) coacting with plunger rods (57, 57a) vertically displaceable in said rotatable platform (15).

FIG. 4

FIG. 1

FIG. 2

FIG. 3

FIG. 5

FIG. 6

FIG. 7

0 001 152

FIG. 8